# FASCICULE DE BREVET EUROPEEN

(11) **EP 4 407 908 B1**
(45) Date de publication et mention de la délivrance du brevet: **12.08.2026**
(21) Numéro de dépôt: 23305111.9
(22) Date de dépôt: 27.01.2023
(51) Int. Cl.: H04L 1/1607, H04L 1/1867, H04L 1/1829

(54) **PROCÉDÉ DE COMMUNICATION DE MESSAGES ENTRE UNE PLURALITÉ D'ÉQUIPEMENTS D'UTILISATEUR**
VERFAHREN ZUR NACHRICHTENKOMMUNIKATION ZWISCHEN EINER VIELZAHL VON BENUTZERGERÄTEN
METHOD FOR COMMUNICATING MESSAGES BETWEEN A PLURALITY OF USER EQUIPMENTS

(43) Date de publication de la demande: 31.07.2024
(73) Titulaire: BULL SAS, 78340 Les Clayes-Sous-Bois (FR)
(72) Inventeur: PIRES, Alexis, 31770 Colomiers (FR); BADET, Mathieu, 31500 Toulouse (FR); BREMEC, Sylvain, 31600 Seysses (FR); SIRE DE VILAR, Arnaud, 31290 Avignonet Lauragais (FR)
(74) Mandataire: Argyma

(56) Documents cités:
- WO-A2-2015/139026
- US-A1- 2004 023 651

## Description

### [Domaine technique]

La présente invention se rapporte au domaine des télécommunications tactiques et concerne plus particulièrement un procédé de de communication de messages entre une pluralité d'équipements d'utilisateur.

### [État de la technique antérieure]

Les réseaux de télécommunication sans fil de type réseaux radios tactiques sont des réseaux qui présentent plusieurs contraintes. Tout d'abord, lors de la découverte de services, il est nécessaire que chaque équipement d'utilisateur faisant partie du réseau soit capable d'identifier et d'adresser les autres équipements d'utilisateur du réseau. Ensuite, ce type de réseaux, mobiles et décentralisés, impliquent des pertes de paquet, ce qui peut poser des problèmes de fiabilité. Enfin, le fonctionnement en mode point-à-point, dit « unicast », peut ne pas être supporté par les équipements d'utilisateur de télécommunication radios tactiques, ce qui présente un inconvénient.

Les solutions connues peuvent être impossibles à mettre en oeuvre ou présenter une fiabilité des échanges insatisfaisante.

Par exemple, le protocole de contrôle des transmissions ou UDP (User Datagram Protocol en langue anglaise) ne possède aucun mécanisme de réémission consistant à s'assurer de la réception de chaque paquet et à réémettre tout paquet non reçu, et peut donc s'avérer de ce fait relativement peu fiable. UDP limite en outre la taille de paquets à 64 ko, ce qui peut s'avérer trop peu dans les réseaux de communication radios à haut débit.

Le protocole de contrôle des transmissions fiable ou RUDP (Reliable User Datagram Protocol en langue anglaise) implémente des mécanismes de réémission mais peut générer beaucoup de trafic de paquets car il utilise un mécanisme d'acquittement systématique de la réception des paquets de données, ce qui peut considérablement dégrader la bande passante utile du réseau. De plus, ce protocole ne fonctionne qu'en mode point-à-point.

Le protocole de la couche transport ou QUIC (Quick UDP Internet Protocol en langue anglaise) ne fonctionne qu'en mode point-à-point (unidiffusion ou unicast) dans sa version initiale, et peut de ce fait s'avérer complexe voire impossible à mettre en oeuvre dans un réseau sans fil ad hoc. Ensuite, QUIC peut générer un nombre important d'acquittements et donc d'échanges de paquets sur le réseau, ce qui peut considérablement dégrader la bande passante du réseau.

Le protocole de contrôle des transmissions ou TCP (Transmission Control Protocol en langue anglaise) ne fonctionne lui-aussi qu'en mode point-à-point (unidiffusion ou unicast) et utilise également un mécanisme d'acquittement systématique de la réception des paquets de données, ce qui présente là-encore des inconvénients.

Il existe donc un besoin d'une solution simple et efficace permettant de remédier au moins en partie à ces inconvénients.

Il est fait référence aux documents suivants :
- US 2004/023651 A1 (GOLLNICK CHARLES D [US] ET AL) 5 février 2004 traitant de Réseau prenant en charge des terminaux itinérants en veille
- WO 2015/139026 A2 (GO TENNA INC [US]) 17 septembre 2015 traitant de Système et procédé de communication numérique entre des dispositifs informatiques

### [Exposé de l'invention]

L'un des buts de l'invention est de permettre un échange de données simple, fiable et efficace au sein de réseaux fortement contraints tels que des réseaux radios tactiques.

À cette fin, l'invention a tout d'abord pour objet un procédé de communication de messages entre une pluralité d'équipements d'utilisateur d'un ensemble d'équipements d'utilisateur via un réseau de communication, notamment sans fil, de préférence ad hoc fortement contraint, ledit procédé comprenant les étapes de :
- diffusion par chaque équipement d'utilisateur de l'ensemble d'équipements d'utilisateur d'un message de statut indiquant la présence dudit équipement d'utilisateur sur le réseau de communication,
- diffusion par l'un, dit « émetteur », des équipements d'utilisateur de l'ensemble d'équipements d'utilisateur, d'une série de messages de données utiles à destination d'au moins un autre équipement d'utilisateur de l'ensemble d'équipements d'utilisateur, chaque message de données utiles de ladite série de message de données utiles comprenant un identifiant dudit message de données utiles et au moins un identifiant d'un équipement d'utilisateur, dit « destinataire », destinataire de ladite série de messages de données utiles,
- pour chaque équipement d'utilisateur, dit « récepteur », ayant reçu au moins un message de données utiles de la série de messages de données utiles diffusée par l'émetteur, détermination à partir de l'au moins un message de données utiles reçu, de son statut de destinataire ou non de la série de messages de données utiles diffusée,
- pour chaque récepteur ayant déterminé un statut de destinataire de la série de messages de données utiles diffusée, envoi par ledit récepteur d'un message d'acquittement à destination de l'émetteur, ledit message d'acquittement comprenant une information de réception pour chaque message de données utiles de la série reçu par ledit récepteur,
- en l'absence de réception d'un message d'acquittement envoyé par un destinataire et après réception d'un message de statut dudit destinataire indiquant sa présence sur le réseau de communication, rediffusion par l'émetteur de la série de messages de données utiles, ou, à réception d'un message d'acquittement dudit destinataire ne comportant pas une information de réception pour chaque message de données utiles de la série et après réception d'un message de statut dudit destinataire indiquant sa présence sur le réseau de communication, rediffusion par l'émetteur de chaque messages de données utiles de la série pour lequel aucune information de réception n'est comprise dans le message d'acquittement reçu.

Grâce à l'invention, l'acquittement des messages de données utiles d'une même série est réalisé via un message d'acquittement unique afin de réduire le nombre de messages échangés et préserver ainsi le réseau de communication, et la rediffusion n'est réalisée que si l'équipement d'utilisateur pour lequel l'acquittement n'est pas complet est toujours présent sur le réseau et seulement pour les messages de données utiles non reçus.

Le procédé selon l'invention permet ainsi à la fois les échanges de données, en particulier au sein de réseaux fortement contraints, tels que les réseaux radios, tout en assurant une haute fiabilité (peu de perte de paquets) et en évitant de dégrader significativement la bande passante, limitant ainsi les pertes de données.

Par les termes « présence d'un équipement d'utilisateur sur le réseau de communication », on entend que l'équipement d'utilisateur est connecté au réseau de sorte à pouvoir recevoir les messages envoyés par les autres équipements d'utilisateur de l'ensemble d'équipements d'utilisateur.

Dans l'invention, un émetteur diffuse des messages à l'ensemble des autres équipements d'utilisateur (mode « broadcast ») mais dans certains cas, seuls un ou certains des autres équipements d'utilisateur peuvent être destinataires de ces messages, c'est-à-dire que les données utiles qu'ils contiennent leur sont destinées. Autrement dit, tous les équipements d'utilisateur peuvent recevoir les messages mais dans certains cas, seuls certains d'entre eux peuvent être destinataires.

De préférence, l'information de réception pour un message de données utiles est l'identifiant dudit message de données utiles.

Ainsi, le message d'acquittement comporte l'identifiant de chaque message de données utiles de la série reçu par le récepteur.

Avantageusement, la taille d'un ensemble de données utiles destinées à être insérées dans un message de données utiles étant supérieure à la taille maximale du champ de données utiles dudit message de données utiles, le procédé comprend une étape de segmentation de l'ensemble de données utiles afin de répartir lesdites données utiles dans une série de messages de données utiles dont les identifiants sont ordonnés dans un ordre croissant afin de permettre à un récepteur de reconstruire entièrement ladite série de messages de données utiles. Ainsi, les messages de taille importante sont segmentés afin de respecter les contraintes de la couche de liaison.

L'invention concerne également un produit programme d'ordinateur caractérisé en ce qu'il comporte un ensemble d'instructions de code de programme qui, lorsqu'elles sont exécutées par un ou plusieurs processeurs, configurent le ou les processeurs pour mettre en œuvre un procédé tel que présenté précédemment.

L'invention concerne également un équipement d'utilisateur émetteur pour la communication de messages entre une pluralité d'équipements d'utilisateur d'un ensemble d'équipements d'utilisateur via un réseau de communication, ledit équipement d'utilisateur étant configuré pour :
- diffuser une série de messages de données utiles à destination d'au moins un autre équipement d'utilisateur de l'ensemble d'équipements d'utilisateur, chaque message de données utiles de ladite série de message de données utiles comprenant un identifiant dudit message de données utiles et un identifiant d'au moins un équipement d'utilisateur destinataire de ladite série de messages de données utiles,
- en l'absence de réception d'un message d'acquittement envoyé par un destinataire et après réception d'un message de statut dudit destinataire indiquant sa présence sur le réseau de communication, rediffuser la série de messages de données utiles, ou, à réception d'un message d'acquittement dudit destinataire ne comportant pas une information de réception pour chaque message de données utiles de la série et après réception d'un message de statut dudit destinataire indiquant sa présence sur le réseau de communication, rediffuser chaque message de données utiles de la série pour lequel aucune information de réception n'est comprise dans le message d'acquittement reçu.

De préférence, l'équipement d'utilisateur émetteur est configuré pour insérer l'identifiant d'un ou de plusieurs destinataires dans chaque message de données utiles de la série de message de données utiles.

De préférence encore, l'équipement d'utilisateur émetteur est configuré pour, la taille d'un ensemble de données utiles destinées à être insérées dans un message de données utiles étant supérieure à la taille maximale du champ de données utiles dudit message de données utiles, segmenter l'ensemble de données utiles afin de répartir lesdites données utiles dans une série de messages de données utiles dont les identifiants sont ordonnés dans un ordre croissant afin de permettre à un récepteur de reconstruire entièrement ladite série de messages de données utiles.

Avantageusement, l'équipement d'utilisateur émetteur est configuré pour diffuser un message de statut indiquant la présence sur le réseau de communication dudit équipement d'utilisateur.

L'invention concerne également un équipement d'utilisateur récepteur pour la communication de messages entre une pluralité d'équipements d'utilisateur d'un ensemble d'équipements d'utilisateur via un réseau de communication, ledit équipement d'utilisateur étant configuré pour :
- diffuser un message de statut indiquant la présence sur le réseau de communication dudit équipement d'utilisateur,
- recevoir au moins un message de données utiles d'une série de messages de données utiles diffusée par un équipement d'utilisateur émetteur de l'ensemble d'équipements d'utilisateur,
- déterminer, à partir d'un message de données utiles d'une série de messages de données utiles diffusée reçu, son statut de destinataire ou non de la série de messages de données utiles diffusée,
- lorsqu'il a déterminé un statut de destinataire d'une série de messages de données utiles diffusée, envoyer un message d'acquittement à destination de l'émetteur, ledit message d'acquittement comprenant une information de réception pour chaque message de données utiles de la série reçu par ledit récepteur.

L'invention concerne également un équipement d'utilisateur configuré pour être à la fois émetteur, comme présenté précédemment, et récepteur, comme décrit ci-avant.

L'invention concerne également un système de communication comprenant une pluralité d'équipements d'utilisateur tels que présentés précédemment et un réseau de communication, de préférence un réseau ad hoc fortement contraint, configuré pour permettre la communication entre lesdits équipements d'utilisateur.

### [Description des dessins]

D'autres caractéristiques et avantages de l'invention apparaîtront encore à la lecture de la description qui va suivre. Celle-ci est purement illustrative et doit être lue en regard des dessins annexés sur lesquels :

La figure 1 illustre schématiquement une forme de réalisation du système selon l'invention.

La figure 2 illustre schématiquement un mode de réalisation du procédé selon l'invention.

### [Description des modes de réalisation]

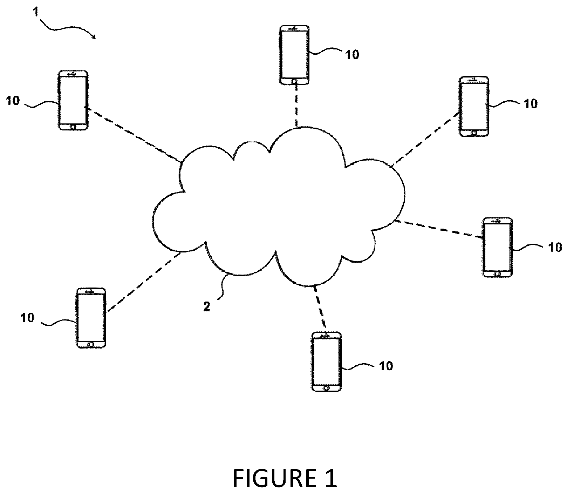

La figure 1 illustre un exemple de système 1 selon l'invention.

### Système 1

Le système 1 comprend un ensemble d'équipements d'utilisateur 10 et un réseau de communication 20.

### Equipement d'utilisateur 10

Dans cet exemple, chaque équipement d'utilisateur 10 est configuré pour fonctionner à la fois en émission et en réception. Chaque équipement d'utilisateur 10 est caractérisé par un identifiant unique dans le système 1.

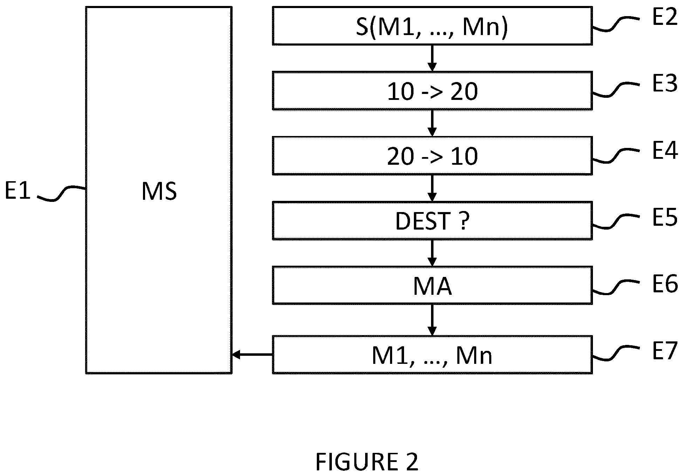

En référence à la figure 2, chaque équipement d'utilisateur 10 est configuré pour émettre trois types de messages : des messages dits « de statut » MS, des messages dits « de données utiles » M1, ..., Mn et des messages d'acquittement MA. Chaque message MS, M1, ..., Mn, MA comprend des données qui sont codées dans un signal émis par l'équipement d'utilisateur 10 émetteur, de manière connue en soi. Ainsi, chaque équipement d'utilisateur 10 est configuré pour coder les données à envoyer dans un signal et pour envoyer ledit signal aux équipements d'utilisateur 10 récepteurs via le réseau de communication 20. De même, chaque équipement d'utilisateur 10 récepteur est configuré pour recevoir les signaux émis par les autres équipements d'utilisateur 10 et pour décoder lesdits signaux afin de déterminer les messages codés dans lesdits signaux.

Les messages de données utiles M1, ..., Mn sont envoyés sous la forme d'une série S de messages. Chaque série S de messages comprend au moins un message de données utiles M1, ..., Mn. Chaque message de données utiles M1, ..., Mn de la série S comprend un identifiant dudit message M1, ..., Mn, des données utiles destinées à un ou plusieurs des autres équipements d'utilisateur 10 de l'ensemble d'équipement d'utilisateur 10, par exemple les données d'une application (ou données applicatives), et le ou les identifiants des équipements d'utilisateur 10 destinataires de la série S de messages de données utiles M1, ..., Mn.

Chaque équipement d'utilisateur 10 est configuré pour émettre une série S de messages de données utiles M1, ..., Mn à chaque fois que ces données utiles doivent être envoyées à un, plusieurs, voire tous les équipements d'utilisateur 10 de l'ensemble d'équipement d'utilisateur 10. À cette fin, chaque équipement d'utilisateur 10 est configuré pour insérer dans chaque message de données utiles M1, ... , Mn de la série S, un identifiant dudit message, et le ou les identifiants des équipements d'utilisateur 10 destinataires.

Un message de statut MS comprend l'identifiant de l'équipement d'utilisateur 10 qui émet ledit message de statut MS afin de permettre aux autres équipements d'utilisateur 10 de savoir que ledit équipement d'utilisateur 10 émetteur du message de statut MS est présent sur le réseau de communication 20 afin de recevoir des messages. Chaque équipement d'utilisateur 10 est configuré pour diffuser, c'est à dire émettre périodiquement, un message de statut MS lorsque ledit équipement d'utilisateur 10 est présent sur le réseau de communication 20.

Chaque équipement d'utilisateur 10 est configuré pour déterminer, à partir d'au moins un message de données utiles M1, ..., Mn reçu, si ledit équipement d'utilisateur 10 est destinataire ou non de la série de messages de données utiles M1, ..., Mn émis.

Chaque équipement d'utilisateur 10 destinataire d'une série S de messages de données utiles M1, ..., Mn est configuré pour envoyer un message d'acquittement MA à destination de l'émetteur. Ce message d'acquittement MA comprend une information de réception pour chaque message de la série S reçu par ledit équipement d'utilisateur 10 destinataire.

Chaque équipement d'utilisateur 10 émetteur est configuré pour, en l'absence de réception d'un message d'acquittement MA envoyé par un destinataire DEST et après réception d'un message de statut MS dudit destinataire DEST indiquant sa présence sur le réseau de communication 20, rediffuser la série S de messages de données utiles M1, ..., Mn.

Chaque équipement d'utilisateur 10 émetteur est configuré pour, à réception d'un message d'acquittement MA dudit destinataire DEST ne comportant pas une information de réception pour chaque message de données utiles M1, ..., Mn de la série S et après réception d'un message de statut MS dudit destinataire DEST indiquant sa présence sur le réseau de communication 20, rediffuser les messages de données utiles M1, ..., Mn de la série S pour lesquels aucune information de réception n'est comprise dans le message d'acquittement MA reçu.

L'information de réception pour un message de données utiles M1, ..., Mn est par exemple l'identifiant dudit message de données utiles M1, ..., Mn.

A titre d'exemple, pour une série S de données utiles comprenant trois messages de données utiles M1, M2, M3 ayant un unique équipement d'utilisateur 10 destinataire, dans le cas où l'équipement d'utilisateur 10 émetteur de la série S reçoit un message de statut MS mais aucun message d'acquittement MA de la part du destinataire, l'émetteur rediffuse l'ensemble des trois messages de données utiles M1, M2, M3 de la série S. Dans le cas où l'équipement d'utilisateur 10 émetteur de la série S reçoit de la part du destinataire, un message de statut MS et un message d'acquittement MA comportant l'identifiant du premier message M1 et l'identifiant du troisième message M3, l'émetteur rediffuse le deuxième message M2 uniquement.

Chaque équipement d'utilisateur 10 comprend un processeur apte à mettre en oeuvre un ensemble d'instructions permettant de réaliser ces fonctions.

### Exemple de mise en œuvre

Un exemple de mode de réalisation du procédé selon l'invention va maintenant être décrit en référence à la figure 2.

De manière permanente, dans une étape E1, chaque équipement d'utilisateur 10 de l'ensemble d'équipements d'utilisateur 10 diffuse un message de statut MS indiquant sa présence sur le réseau de communication 20. En pratique, une telle diffusion se traduit par une émission périodique du message de statut MS, le contenu de ce dernier comprenant a minima l'identifiant de l'équipement d'utilisateur 10 qui l'émet.

Lorsque l'un des équipements d'utilisateur 10 a besoin d'émettre une série S de messages de données utiles M1, ..., Mn, par exemple liés à une application, à destination d'un ou de plusieurs des autres équipements d'utilisateur 10 de l'ensemble d'équipements d'utilisateur 10, voire à tous les autres équipements d'utilisateur 10 de l'ensemble d'équipements d'utilisateur 10, ledit équipement d'utilisateur 10, désigné « émetteur », génère la série S de message de données utiles M1, ..., Mn à envoyer dans une étape E2. Cette étape E2 comprend, si nécessaire, la segmentation de l'ensemble des données utiles à envoyer en plusieurs sous-ensembles, chaque sous-ensemble étant envoyé dans un message de données utiles M1, ..., Mn de la série S dans l'ordre de segmentation de l'ensemble des données utiles. L'étape E2 comprend ensuite l'insertion de chaque sous-ensemble dans un message de données utiles M1, ..., Mn différent de la série S, l'attribution d'un identifiant à chaque message de données utiles M1, ..., Mn et l'insertion de l'identifiant du ou des destinataires DEST de la série S.

L'équipement d'utilisateur 10 émetteur diffuse chaque message de données utiles M1, ..., Mn de la série S, à tour de rôle dans l'ordre de ladite série S, via le réseau de communication 20 dans une étape E3. Les messages de données utiles M1, ..., Mn de la série S peuvent être diffusés au fur et à mesure qu'ils sont générés, un à un ou bien la série S peut d'abord être générée puis diffusée en une salve, de préférence dans l'ordre des messages de données utiles M1, ..., Mn de la série S.

Les messages de données utiles M1, ..., Mn envoyés par l'équipement d'utilisateur 10 émetteur sont reçus par certains ou tous les autres équipements d'utilisateur 10, dits « récepteurs » dans une étape E4. Tout ou partie des messages de données utiles M1, ..., Mn envoyés par l'équipement d'utilisateur 10 émetteur peuvent ne pas être reçus par certains ou par tous les équipements d'utilisateur 10 récepteurs.

A réception d'un message de données utiles M1, ..., Mn par un équipement d'utilisateur 10 récepteur, l'équipement d'utilisateur 10 récepteur analyse le message de données utiles M1, ..., Mn afin de déterminer le ou les identifiants de destinataire DEST correspondant à son propre identifiant (i.e. son identifiant unique avec lequel il indique qu'il est connecté au réseau de communication 20 dans ses messages de statut MS) dans une étape E5. En l'absence d'identifiant de destinataire DEST dans le message reçu, le récepteur en déduit que le message reçu est destiné à tous les équipements d'utilisateur 10 de l'ensemble d'équipements d'utilisateur 10.

Ensuite, pour chaque récepteur ayant déterminé un statut de destinataire DEST de la série S de messages de données utiles M1, ..., Mn envoyés, ledit récepteur envoie dans une étape E6 un message d'acquittement MA, comprenant une information de réception pour chaque message de données utiles de la série reçu par ledit récepteur, à destination de l'émetteur via le réseau de communication 20.

Ensuite, dans une étape E7, en l'absence de réception d'un message d'acquittement MA envoyé par un destinataire DEST et après réception d'un message de statut MS dudit destinataire DEST indiquant sa présence sur le réseau de communication 20, l'émetteur rediffuse la série de messages de données utiles M1, ..., Mn, ou bien, à réception d'un message d'acquittement MA dudit destinataire DEST ne comportant pas une information de réception pour chaque message de données utiles M1, ..., Mn de la série S et après réception d'un message de statut MS dudit destinataire DEST indiquant sa présence sur le réseau de communication 20, l'émetteur rediffuse les messages de données utiles M1, ..., Mn de la série S pour lesquels aucune information de réception n'est comprise dans le message d'acquittement MA reçu par ledit destinataire DEST.

Il est à noter que plusieurs émetteurs peuvent envoyer des messages de données utiles M1, ..., Mn simultanément et qu'un émetteur peut ainsi également être récepteur de messages de données utiles M1, ..., Mn envoyés par un autre émetteur de l'ensemble d'équipements d'utilisateur 10.

L'invention permet de s'assurer que l'ensemble des messages de données utiles M1, ..., Mn d'une série S de message de données utiles M1, ..., Mn envoyés par un émetteur est bien reçu par le ou les destinataires de ladite série S de messages de données utiles M1, ..., Mn.

## Revendications

1. Procédé de communication de messages entre une pluralité d'équipements d'utilisateur (10) d'un ensemble d'équipements d'utilisateur (10) via un réseau de communication (20), ledit procédé comprenant les étapes de :
- diffusion (E1) périodique par chaque équipement d'utilisateur (10) de l'ensemble d'équipements d'utilisateur (10) d'un message de statut (MS) indiquant la présence dudit équipement d'utilisateur (10) sur le réseau de communication (20),
- diffusion (E3) par l'un, dit « émetteur », des équipements d'utilisateur (10) de l'ensemble d'équipements d'utilisateur (10) d'une série (S) de messages de données utiles (M1, ..., Mn) à destination d'au moins un autre équipement d'utilisateur (10) de l'ensemble d'équipements d'utilisateur (10), chaque message de données utiles (M1, ..., Mn) de ladite série (S) de message de données utiles (M1, ..., Mn) comprenant un identifiant dudit message de données utiles (M1, ..., Mn) et au moins un identifiant d'un équipement d'utilisateur (10) destinataire de ladite série (S) de messages de données utiles (M1, ..., Mn),
- pour chaque équipement d'utilisateur, dit « récepteur », ayant reçu (E4) au moins un message de données utiles de la série de messages de données utiles diffusée par l'émetteur, détermination (E5) à partir de l'au moins un message de données utiles (M1, ..., Mn) reçu, de son statut de destinataire (DEST) ou non de la série de messages de données utiles (M1, ..., Mn) diffusée,
- pour chaque récepteur ayant déterminé un statut de destinataire (DEST) de la série (S) de messages de données utiles (M1, ..., Mn) diffusée, envoi (E6) par ledit récepteur d'un message d'acquittement (MA) à destination de l'émetteur, ledit message d'acquittement (MA) comprenant une information de réception pour chaque message de données utiles (M1, ..., Mn) de la série (S) reçu par ledit récepteur,
- en l'absence de réception d'un message d'acquittement (MA) envoyé par un destinataire (DEST) et après réception d'un message de statut (MS) dudit destinataire (DEST) indiquant sa présence sur le réseau de communication (20), rediffusion (E7) par l'émetteur de la série (S) de messages de données utiles (M1, ..., Mn), ou, à réception d'un message d'acquittement (MA) dudit destinataire (DEST) ne comportant pas une information de réception pour chaque message de données utiles (M1, ..., Mn) de la série (S) et après réception d'un message de statut (MS) dudit destinataire (DEST) indiquant sa présence sur le réseau de communication (20), rediffusion (E7) par l'émetteur de chaque message de données utiles (M1, ..., Mn) de la série (S) pour lequel aucune information de réception n'est comprise dans le message d'acquittement (MA) reçu par ledit destinataire (DEST).

2. Procédé selon la revendication 1, dans lequel l'information de réception d'un message de données utiles (M1, ..., Mn) est l'identifiant dudit message de données utiles (M1, ..., Mn).

3. Procédé selon l'une quelconque des revendications précédentes, comprenant, la taille d'un ensemble de données utiles destinées à être insérées dans un message de données utiles (M1, ..., Mn) étant supérieure à la taille maximale du champ de données utiles dudit message de données utiles (M1, ..., Mn), une étape de segmentation de l'ensemble de données utiles afin de répartir lesdites données utiles dans une série (S) de messages de données utiles (M1, ..., Mn) dont les identifiants sont ordonnés dans un ordre croissant afin de permettre à un récepteur de reconstruire entièrement ladite série (S) de messages de données utiles (M1, ..., Mn).

4. Produit programme d'ordinateur **caractérisé en ce qu'**il comporte un ensemble d'instructions de code de programme qui, lorsqu'elles sont exécutées par un ou plusieurs processeurs, configurent le ou les processeurs pour mettre en œuvre un procédé selon l'une quelconque des revendications précédentes.

5. Equipement d'utilisateur (10) émetteur pour la communication de messages entre une pluralité d'équipements d'utilisateur (10) d'un ensemble d'équipements d'utilisateur (10) via un réseau de communication (20), ledit équipement d'utilisateur (10) étant configuré pour :
- diffuser une série (S) de messages de données utiles (M1, ..., Mn) à destination d'au moins autre équipement d'utilisateur (10) de l'ensemble d'équipements d'utilisateur (10), chaque message de données utiles (M1, ..., Mn) de ladite série (S) de message de données utiles (M1, ..., Mn) comprenant un identifiant dudit message de données utiles (M1, ..., Mn) et un identifiant d'au moins un équipement d'utilisateur (10) destinataire de ladite série (S) de messages de données utiles (M1, ..., Mn),
- en l'absence de réception d'un message d'acquittement (MA) envoyé par un destinataire (DEST) et après réception d'un message de statut (MS) dudit destinataire (DEST) indiquant sa présence sur le réseau de communication (20), rediffuser la série (S) de messages de données utiles (M1, ..., Mn), ou, à réception d'un message d'acquittement (MA) dudit destinataire (DEST) ne comportant pas une information de réception pour chaque message de données utiles (M1, ..., Mn) de la série (S) et après réception d'un message de statut (MS) dudit destinataire (DEST) indiquant sa présence sur le réseau de communication (20), rediffuser chaque message de données utiles (M1, ..., Mn) de la série (S) pour lequel aucune information de réception n'est comprise dans le message d'acquittement (MA) reçu par ledit destinataire (DEST).

6. Equipement d'utilisateur (10) selon la revendication précédente, ledit équipement d'utilisateur (10) étant configuré pour, la taille d'un ensemble de données utiles destinées à être insérées dans un message de données utiles (M1, ..., Mn) étant supérieure à la taille maximale du champ de données utiles dudit message de données utiles (M1, ..., Mn), segmenter l'ensemble de données utiles afin de répartir lesdites données utiles dans une série (S) de messages de données utiles (M1, ..., Mn) dont les identifiants sont ordonnés dans un ordre croissant afin de permettre à un récepteur de reconstruire entièrement ladite série (S) de messages de données utiles (M1, ..., Mn).

7. Equipement d'utilisateur (10) selon l'une quelconque des revendications 5 ou 6, ledit équipement d'utilisateur (10) étant configuré pour insérer l'identifiant d'un ou de plusieurs destinataires dans chaque message de données utiles (M1, ..., Mn) de la série (S) de message de données utiles (M1, ..., Mn).

8. Equipement d'utilisateur (10) selon l'une quelconque des revendications 5 à 7, ledit équipement d'utilisateur (10) étant configuré pour diffuser périodiquement un message de statut (MS) indiquant la présence sur le réseau de communication (20) dudit équipement d'utilisateur (10).

9. Equipement d'utilisateur (10) récepteur pour la communication de messages entre une pluralité d'équipements d'utilisateur (10) d'un ensemble d'équipements d'utilisateur (10) via un réseau de communication (20), ledit équipement d'utilisateur (10) étant configuré pour :
- diffuser périodiquement un message de statut (MS) indiquant la connexion au réseau de communication (20) dudit équipement d'utilisateur (10),
- recevoir au moins un message de données utiles (M1, ..., Mn) d'une série (S) de messages de données utiles (M1, ..., Mn) diffusée par un équipement d'utilisateur (10) émetteur de l'ensemble d'équipements d'utilisateur (10),
- déterminer, à partir d'un message de données utiles (M1, ..., Mn) reçu, son statut de destinataire (DEST) ou non d'une série (S) de messages de données utiles (M1, ..., Mn) diffusée,
- lorsqu'il a déterminé un statut de destinataire (DEST) d'une série (S) de messages de données utiles (M1, ..., Mn) diffusée, envoyer un message d'acquittement (MA) à destination de l'émetteur des messages de données utiles (M1, ..., Mn) de la série (S), ledit message d'acquittement (MA) comprenant une information de réception pour chaque message de données utiles (M1, ..., Mn) de la série (S) reçu par ledit récepteur.

10. Système (1) de communication comprenant une pluralité d'équipements d'utilisateur (10) selon l'une quelconque des revendications 5 à 9 et un réseau de communication (20), de préférence un réseau ad hoc fortement contraint, configuré pour permettre la communication entre lesdits équipements d'utilisateur (10).

## Patentansprüche

1. Verfahren zur Kommunikation von Nachrichten zwischen einer Vielzahl von Benutzereinrichtungen (10) einer Menge an Benutzereinrichtungen (10) über ein Kommunikationsnetzwerk (20), das Verfahren umfassend die Schritte:
- periodisches Übertragen (E1), durch jede Benutzereinrichtung (10) der Menge an Benutzereinrichtungen (10), einer Statusnachricht (MS), die die Anwesenheit der Benutzereinrichtung (10) in dem Kommunikationsnetzwerk (20) angibt,
- Übertragen (E3), durch einen sogenannten "Emitter" der Benutzereinrichtungen (10) der Menge an Benutzereinrichtungen (10), einer Reihe (S) von Nutzdatennachrichten (M1, ..., Mn) an mindestens eine andere Benutzereinrichtung (10) der Menge an Benutzereinrichtungen (10), jede Nutzdatennachricht (M1, ..., Mn) der Reihe (S) von Nutzdatennachrichten (M1, ..., Mn) umfassend eine Kennung der Nutzdatennachricht (M1, ..., Mn) und mindestens eine Kennung einer Benutzereinrichtung (10), die Empfänger der Reihe (S) von Nutzdatennachrichten (M1, ..., Mn) ist,
- für jede Benutzereinrichtung, genannt "Empfangseinrichtung", die mindestens eine Nutzdatennachricht aus der Reihe von Nutzdatennachrichten, die durch den Emitter übertragen wird, empfangen hat (E4), Bestimmen (E5) aus der mindestens einen empfangenen Nutzdatennachricht (M1, ..., Mn) ihres Status als Empfänger (DEST) oder nicht, der übertragenen Reihe von Nutzdatennachrichten (M1, ..., Mn),
- für jede Empfangseinrichtung, für die ein Status als Empfänger (DEST) der übertragenen Reihe (S) von Nutzdatennachrichten (M1, ..., Mn) bestimmt wurde, Senden (E6), durch die Empfangseinrichtung, einer Bestätigungsnachricht (MA) an den Emitter, der Bestätigungsnachricht (MA) umfassend eine Empfangsinformation für jede Nutzdatennachricht (M1, ..., Mn) der Reihe (S), die durch die Empfangseinrichtung empfangen wird,
- bei Ausbleiben des Empfangs einer Empfangsbestätigungsnachricht (MA), die durch einen Empfänger (DEST) gesendet wird, und nach Empfang einer Statusnachricht (MS) des Empfängers (DEST), die seine Anwesenheit in dem Kommunikationsnetz (20) angibt, erneutes Übertragen (E7), durch den Emitter, der Reihe (S) von Nutzdatennachrichten (M1, ..., Mn) oder bei Empfang einer Empfangsbestätigungsnachricht (MA) des Empfängers (DEST), die keine Empfangsinformation für jede Nutzdatennachricht (M1, ..., Mn) der Reihe (S) vorweist, und nach Empfang einer Statusnachricht (MS) des Empfängers (DEST), die seine Anwesenheit in dem Kommunikationsnetz (20) angibt, erneutes Übertragen (E7), durch den Emitter, jeder Nutzdatennachricht (M1, ..., Mn) der Reihe (S), für die keine Empfangsinformation in der Empfangsbestätigungsnachricht (MA), die durch den Empfänger (DEST) empfangen wird, umfasst ist.

2. Verfahren nach Anspruch 1, wobei die Empfangsinformation einer Nutzdatennachricht (M1, ..., Mn) die Kennung der Nutzdatennachricht (M1, ..., Mn) ist.

3. Verfahren nach einem der vorstehenden Ansprüche, umfassend, wenn die Größe einer Menge an Nutzdaten, die dafür vorgesehen sind, in eine Nutzdatennachricht (M1, ..., Mn) eingefügt zu werden, größer als die maximale Größe des Nutzdatenfelds der Nutzdatennachricht (M1, ..., Mn) ist, einen Schritt des Segmentierens der Menge an Nutzdaten, um die Nutzdaten in einer Reihe (S) von Nutzdatennachrichten (M1, ..., Mn) zu verteilen, deren Kennungen in steigender Ordnung geordnet sind, um es einer Empfangseinrichtung zu ermöglichen, die Reihe (S) von Nutzdatennachrichten (M1, ..., Mn) vollständig zu rekonstruieren.

4. Computerprogrammprodukt, **dadurch gekennzeichnet, dass** es eine Menge an Programmcodeanweisungen vorweist, die, wenn sie durch einen oder mehrere Prozessoren ausgeführt werden, den oder die Prozessoren zum Implementieren eines Verfahrens nach einem der vorstehenden Ansprüche konfigurieren.

5. Benutzereinrichtung (10) als Emitter für die Kommunikation von Nachrichten zwischen einer Vielzahl von Benutzereinrichtungen (10) einer Menge an Benutzereinrichtungen (10) über ein Kommunikationsnetzwerk (20), wobei die Benutzereinrichtung (10) konfiguriert ist zum
- Übertragen einer Reihe (S) von Nutzdatennachrichten (M1, ..., Mn) an mindestens eine andere Benutzereinrichtung (10) der Menge an Benutzereinrichtungen (10), jede Nutzdatennachricht (M1, ..., Mn) der Reihe (S) von Nutzdatennachrichten (M1, ..., Mn) umfassend eine Kennung der Nutzdatennachricht (M1, ..., Mn) und eine Kennung von mindestens einer Benutzereinrichtung (10), die Empfänger der Reihe (S) von Nutzdatennachrichten (M1, ..., Mn) ist,
- bei Ausbleiben des Empfangs einer Empfangsbestätigungsnachricht (MA), die durch einen Empfänger (DEST) gesendet wird, und nach Empfang einer Statusnachricht (MS) des Empfängers (DEST), die seine Anwesenheit in dem Kommunikationsnetz (20) angibt, erneutes Übertragen der Reihe (S) von Nutzdatennachrichten (M1, ..., Mn) oder bei Empfang einer Empfangsbestätigungsnachricht (MA) des Empfängers (DEST), die keine Empfangsinformation für jede Nutzdatennachricht (M1, ..., Mn) der Reihe (S) vorweist, und nach Empfang einer Statusnachricht (MS) des Empfängers (DEST), die seine Anwesenheit in dem Kommunikationsnetz (20) angibt, erneutes Übertragen jeder Nutzdatennachricht (M1, ..., Mn) der Reihe (S), für die keine Empfangsinformation in der Empfangsbestätigungsnachricht (MA), die durch den Empfänger (DEST) empfangen wird, umfasst ist.

6. Benutzereinrichtung (10) nach dem vorstehenden Anspruch, wobei die Benutzereinrichtung (10) konfiguriert ist zum, wenn die Größe einer Menge an Nutzdaten, die dafür vorgesehen sind, in eine Nutzdatennachricht (M1, ..., Mn) eingefügt zu werden, größer als die maximale Größe des Nutzdatenfelds der Nutzdatennachricht (M1, ..., Mn) ist, Segmentieren der Menge an Nutzdaten, um die Nutzdaten in einer Reihe (S) von Nutzdatennachrichten (M1, ..., Mn) zu verteilen, deren Kennungen in steigender Ordnung geordnet sind, um es einer Empfangseinrichtung zu ermöglichen, die Reihe (S) von Nutzdatennachrichten (M1, ..., Mn) vollständig zu rekonstruieren.

7. Benutzereinrichtung (10) nach einem der Ansprüche 5 oder 6, wobei die Benutzereinrichtung (10) konfiguriert ist zum Einfügen der Kennung eines oder mehrerer Empfänger in jede Nutzdatennachricht (M1, ..., Mn) der Reihe (S) von Nutzdatennachrichten (M1, ..., Mn).

8. Benutzereinrichtung (10) nach einem der Ansprüche 5 bis 7, wobei die Benutzereinrichtung (10) konfiguriert ist zum periodischen Übertragen eine Statusnachricht (MS), die die Anwesenheit in dem Kommunikationsnetz (20) der Benutzereinrichtung (10) angibt.

9. Benutzereinrichtung (10) als Empfangseinrichtung für die Kommunikation von Nachrichten zwischen einer Vielzahl von Benutzereinrichtungen (10) einer Gesamtheit von Benutzereinrichtungen (10) über ein Kommunikationsnetz (20), wobei die Benutzereinrichtung (10) konfiguriert ist zum:
- periodisches Aussenden einer Statusmeldung (MS), die die Verbindung zu dem Kommunikationsnetz (20) der Benutzereinrichtung (10) angibt,
- Empfangen mindestens einer Nutzdatennachricht (M1, ..., Mn) einer Reihe (S) von Nutzdatennachrichten (M1, ..., Mn), die durch eine Benutzereinrichtung (10) als Emitter von der Menge an Benutzereinrichtungen (10) übertragen wird,
- Bestimmen, aus einer empfangenen Nutzdatennachricht (M1, ..., Mn), eines Status als Empfänger (DEST) oder nicht, einer übertragenen Reihe (S) von Nutzdatennachrichten (M1, ..., Mn),
- wenn sie einen Status als Empfänger (DEST) einer übertragenen Reihe (S) von Nutzdatennachrichten (M1, ..., Mn) bestimmt hat, Senden einer Bestätigungsnachricht (MA) an den Emitter der Nutzdatennachrichten (M1, ..., Mn) der Reihe (S), die Bestätigungsnachricht (MA) umfassend eine Empfangsinformation für jede Nutzdatennachricht (M1, ..., Mn) der Reihe (S), die durch diesen empfangen wird.

10. System (1) zur Kommunikation, umfassend eine Vielzahl von Benutzereinrichtungen (10) nach einem der Ansprüche 5 bis 9 und ein Kommunikationsnetz (20), vorzugsweise ein stark eingeschränktes Ad-hoc-Netzwerk, das zum Ermöglichen der Kommunikation zwischen den Benutzereinrichtung (10) konfiguriert ist.

## Claims

1. Method for communicating messages between a plurality of pieces of user equipment (10) of a set of pieces of user equipment (10) via a communication network (20), said method comprising the steps of:
- periodically broadcasting (E1), by each piece of user equipment (10) of the set of pieces of user equipment (10), a status message (MS) indicating the presence of said piece of user equipment (10) on the communication network (20),
- broadcasting (E3) by one, referred to as a "transmitter", of the pieces of user equipment (10) of the set of pieces of user equipment (10), a series (S) of payload messages (M1, ..., Mn) to at least one other piece of user equipment (10) of the set of pieces of user equipment (10), each payload message (M1, ..., Mn) of said series (S) of payload messages (M1, ..., Mn) comprising an identifier of said payload message (M1, ..., Mn) and at least one identifier of a piece of user equipment (10) that is the recipient of said series (S) of payload messages (M1, ..., Mn),
- for each piece of user equipment, referred to as a "receiver", having received (E4) at least one payload message from the series of payload messages broadcast by the transmitter, determining (E5) from the at least one received payload message (M1, ..., Mn), whether or not it is a recipient (DEST) of the broadcast series of payload messages (M1, ..., Mn),
- for each receiver having determined a recipient status (DEST) of the broadcast series (S) of payload messages (M1, ..., Mn), sending (E6) by said receiver an acknowledgement message (MA) to the transmitter, said acknowledgement message (MA) comprising reception information for each payload message (M1, ..., Mn) of the series (S) received by said receiver,
- in the absence of receipt of an acknowledgement message (MA) sent by a recipient (DEST) and after receipt of a status message (MS) from said recipient (DEST) indicating its presence on the communication network (20), rebroadcasting (E7) by the transmitter of the series (S) of payload messages (M1, .., Mn), or, upon receipt of an acknowledgement message (MA) from said recipient (DEST) which does not include reception information for each payload message (M1, ...., Mn) of the series (S) and after receipt of a status message (MS) from said recipient (DEST) indicating its presence on the communication network (20), rebroadcasting (E7) by the transmitter of each payload message (M1, ..., Mn) of the series (S) for which no reception information is included in the acknowledgement message (MA) received by said recipient (DEST).

2. Method according to claim 1, wherein the reception information of a payload message (M1, ..., Mn) is the identifier of said payload message (M1, ..., Mn).

3. Method according to either of the preceding claims, comprising, the size of a payload set intended to be inserted into a payload message (M1, ..., Mn) being greater than the maximum size of the payload field of said payload message (M1, ..., Mn), a step of segmenting the payload set in order to distribute said payload into a series (S) of payload messages (M1, ..., Mn), the identifiers of which are ordered in ascending order in order to enable a receiver to completely reconstruct said series (S) of payload messages (M1, ..., Mn).

4. Computer program product **characterised in that** it comprises a set of program code instructions which, when executed by one or more processors, configure the processor(s) to implement a method according to any of the preceding claims.

5. Transmitting piece of user equipment (10) for communicating messages between a plurality of pieces of user equipment (10) of a set of pieces of user equipment (10) via a communication network (20), said piece of user equipment (10) being configured to:
- broadcast a series (S) of payload messages (M1, ..., Mn) to at least one other piece of user equipment (10) of the set of pieces of user equipment (10), each payload message (M1, ..., Mn) of said series (S) of payload messages (M1, ..., Mn) comprising an identifier of said payload message (M1, ..., Mn) and an identifier of at least one piece of user equipment (10) that is the recipient of said series (S) of payload messages (M1, ..., Mn),
- in the absence of receipt of an acknowledgement message (MA) sent by a recipient (DEST) and after receipt of a status message (MS) from said recipient (DEST) indicating its presence on the communication network (20), rebroadcast the series (S) of payload messages (M1, ..., Mn), or, upon receipt of an acknowledgement message (MA) from said recipient (DEST) which does not include reception information for each payload message (M1, ..., Mn) of the series (S) and after receipt of a status message (MS) from said recipient (DEST) indicating its presence on the communication network (20), rebroadcast each payload message (M1, ..., Mn) of the series (S) for which no reception information is included in the acknowledgement message (MA) received by said recipient (DEST).

6. Piece of user equipment (10) according to the preceding claim, said piece of user equipment (10) being configured to, the size of a payload set intended to be inserted into a payload message (M1, ..., Mn) being greater than the maximum size of the payload field of said payload message (M1, ..., Mn), segment the payload set in order to distribute said payload into a series (S) of payload messages (M1, ..., Mn), the identifiers of which are ordered in ascending order in order to enable a receiver to completely reconstruct said series (S) of payload messages (M1, ..., Mn).

7. Piece of user equipment (10) according to either of claims 5 or 6, said piece of user equipment (10) being configured to insert the identifier of one or more recipients into each payload message (M1, ..., Mn) of the series (S) of payload messages (M1, ..., Mn).

8. Piece of user equipment (10) according to any of claims 5 to 7, said piece of user equipment (10) being configured to periodically broadcast a status message (MS) indicating the presence of said piece of user equipment (10) on the communication network (20).

9. Receiving piece of user equipment (10) for communicating messages between a plurality of pieces of user equipment (10) of a set of pieces of user equipment (10) via a communication network (20), said piece of user equipment (10) being configured to:
- periodically broadcast a status message (MS) indicating connection to the communication network (20) of said piece of user equipment (10),
- receive at least one payload message (M1, ..., Mn) from a series (S) of payload messages (M1, ..., Mn) broadcast by a transmitting piece of user equipment (10) of the set of pieces of user equipment (10),
- determine, from a received payload message (M1, ..., Mn), whether or not it is the recipient (DEST) of a series (S) of broadcast payload messages (M1, ..., Mn),
- when it has determined a recipient status (DEST) of a broadcast series (S) of payload messages (M1, ..., Mn), send an acknowledgement message (MA) to the transmitter of the payload messages (M1, ..., Mn) of the series (S), said acknowledgement message (MA) comprising reception information for each payload message (M1, ..., Mn) of the series (S) received by said receiving piece of user equipement.

10. Communication system (1) comprising a plurality of pieces of user equipment (10) according to any of claims 5 to 9 and a communication network (20), preferably a highly constrained ad hoc network, configured to enable communication between said pieces of user equipment (10).
